# FASCICULE DE BREVET EUROPEEN

(11) **EP 0 509 434 B1**
(45) Date de publication et mention de la délivrance du brevet: **16.07.1997**
(21) Numéro de dépôt: 92106368.1
(22) Date de dépôt: 13.04.1992
(51) Int. Cl.: H04B 10/08, G01M 11/00

(54) **Installation de transmission à liaison optique télésurveillée**
Übertragungsanlage mit fernüberwachter optischer Verbindung
Transmission installation with monitored optical link

(30) Priorité: 16.04.1991 FR 9104632
(43) Date de publication de la demande: 21.10.1992
(73) Titulaire: ALCATEL CABLE, F-92111 Clichy Cédex (FR); ALCATEL N.V., NL-1077 XX Amsterdam (NL)
(72) Inventeur: Tache, Jean-Paul, F-69440 Mornant (FR)
(74) Mandataire: Weinmiller, Jürgen

(56) Documents cités:
- EP-A- 0 365 371
- EP-A- 0 390 320
- IEEE PHOTONICS TECHNOLOGY LETTERS vol. 2, no. 10, Octobre 1990, NEW YORK US pages 766 - 768 I.SANKAWA ET AL 'Fault Location Technique for In-Service Branched Optical Fiber Networks'

## Description

La présente invention porte sur les installations de transmission de signaux sur une liaison à fibres optiques et de télésurveillance de ladite liaison.

Dans les installations de transmissions à liaison optique, des équipements terminaux émetteurs et récepteurs électro-optiques sont couplés aux fibres optiques individuelles de la liaison qui assurent la transmission des signaux dits utiles entre eux. Pour la télésurveillance de la liaison optique, un équipement terminal de télésurveillance est en outre couplé à l'extrémité d'émission des fibres optiques. Il permet de détecter depuis cette extrémité d'éventuels défauts, tels que cassure ou autre défaut provoquant une atténuation anormale sur la ou les fibres optiques en surveillance, auxquelles est couplé cet équipement de télésurveillance, et de localiser les défauts détectés.

Les équipements de télésurveillance sont en tant que tels connus. Ils sont, en particulier, à réflectomètre optique, qui génère périodiquement des brèves impulsions calibrées à une longueur d'onde donnée, constituant le signal de mesure injecté dans la fibre optique en surveillance, et qui détecte en réponse les signaux de rétrodiffusion dûs notamment aux défauts dans la fibre, et à calculateur associé, qui permet de localiser les défauts dans cette fibre optique à partir des signaux de rétrodiffusion reçus du réflectomètre.

Pour la télésurveillance d'une liaison optique, avec la transmission des signaux utiles sur la liaison, les signaux utiles et les signaux de mesure sont émis à des longueurs d'onde différentes et multiplexés en longueur d'onde pour leur injection sur l'extrémité d'émission de la fibre optique concernée.

Le document FR-A-2 637 432 notamment décrit un système de télésurveillance pour une installation de transmission optique. La liaison à fibres optique est du type point à point entre des terminaux multiples de deux stations éloignées ou du type point-multipoint entre le ou les terminaux d'une station dite principale et les terminaux de plusieurs stations dites secondaires. Les fibres optiques sont des fibres multimodales ou de préférence des fibres unimodales pour une télésurveillance d'une liaison relativement longue.

Selon ce document, le système de télésurveillance, à réflectomètre et calculateur associé, est situé dans au moins l'une des deux stations éloignées ou dans la station principale, selon le type d'installation ou de liaison. Il est couplé à l'extrémité d'émission des fibres dans la station concernée à travers un duplexeur reliant également chacune de ces fibres à l'émetteur du terminal correspondant de cette station.

Le duplexeur a un premier accès relié à l'émetteur de ce terminal correspondant, un deuxième accès couplé au système de télésurveillance et un troisième accès dit commun relié à l'extrémité d'émission de la fibre. Ce couplage du système de télésurveillance peut être réalisé séquentiellement sur les deuxièmes accès des différents duplexeurs ou par une transmission série du seul signal de mesure de l'une de ces fibres à une autre à travers les duplexeurs dont les deuxièmes accès sont connectés en série les uns aux autres.

En particulier selon ce document, la liaison optique étant à fibres unimodales, la transmission des signaux utiles et la télésurveillance sont assurées aux longueurs d'onde de 1310 nm et 1 550 nm respectivement. Le premier et deuxième accès de chaque duplexeur sont calés sur ces longueurs d'onde respectivemnt. Le troisième accès commun est à large bande incluant ces deux longueurs d'onde.

Dans l'installation résultante, la transmission des signaux utiles se trouve en conséquence limitée par la télésurveillance réalisée qui est assurée à l'une de ces longueurs d'onde et ne laisse donc disponible que l'autre de ces deux longueurs d'onde pour les signaux utiles.

On connaît également par l'article intitulé "Fault Location Technique for In-Service Branched Optical Fiber Networks" publié dans IEEE Photonics Technology Letters, Vol.2, No.10, octobre 1990, pages 766 à 768 une installation de transmission de signaux sur une liaison optique télésurveillée. Dans cette installation, une fibre monomode est alimentée par un central téléphonique et éclate dans un diviseur optique en N voies de distribution de signaux utiles par N fibres monomodes à N usagers.

Selon cet article, les signaux utiles peuvent être transmis à deux longueurs d'onde de la bande 1 200- 1 600 nm, soit à des valeurs nominales de 1 550 et 1 310 nm. La télésurveillance est alors assurée par des signaux de mesure à une longueur d'onde de valeur nominale de 1 650 nm. Le choix de cette longueur d'onde de mesure conduit à une atténuation très importante du signal de mesure en cas de défaut présent ou créé sur la fibre, que l'on souhaite détecter par rétrodiffusion. Il en résulte un niveau du signal rétrodiffusé souvent trop faible, pour une détection aisée par le réflectomètre de plusieurs défauts consécutifs. Par ailleurs on ne sait pas actuellement émettre les signaux de mesure à cette longueur d'onde avec des lasers semiconducteurs et à une puissance d'émission suffisamment élevée, pour compenser cette atténuation importante et permettre la détection du signal rétrodiffusé et/ou la télésurveillance d'une liaison optique de longueur importante.

La présente invention a pour but de remédier aux inconvénients des deux techniques connues indiquées ci-avant.

Elle a pour objet une installation de transmission à liaison optique télésurveillée, dans laquelle ladite liaison est à fibres optiques unimodales couplant une station centrale d'émission/réception de signaux dits utiles à des terminaisons d'abonnés, et ladite station centrale comporte des premiers et seconds moyens électro-optiques d'émission/réception desdits signaux utiles à une première et respectivement une deuxième longueur d'onde de transmission définies et différentes l'une de l'autre, typiquement de valeurs nominales sensiblement égales à 1 310 nm et 1 550 nm, respectivement, un ensemble de télésurveillance à réflectomètre optique générant un signal dit de mesure à une troisième longueur d'onde de mesure différente desdites première et deuxième longueurs d'onde de transmission, et des moyens de couplage ayant d'une part des accès sélectifs en longueur d'onde couplés individuellement auxdits premiers et seconds moyens d'émission/réception et audit réflectomètre, et d'autre part un accès commun large bande bande, caractérisée en ce que ledit réflectomètre est un réflectomètre calé sur ladite troisième longueur d'onde de mesure choisie entre lesdites première et deuxième longueurs d'onde et typiquement de valeur nominale sensiblement égale à 1 480 nm, et en ce que lesdits moyens de couplage ont ledit accès commun à large bande centrée sensiblement sur ladite troisième longueur d'onde.

Ladite installation selon la présente invention présente en outre au moins l'une des particularités suivantes :
- la puissance d'émission du signal de mesure est de l'ordre de 70 mW;
- lesdits premiers et seconds moyens électro-optiques d'émission/réception de signaux utiles sont constitués par un central téléphonique et au moins un premier composant électro-optique associé modulé par les signaux d'informations dudit central à transmettre sur ladite liaison, et par un réseau vidéo et au moins un deuxième composant électro-optique associé modulé par les signaux de données dudit réseau à transmettre sur ladite liaison,
- ledit réflectomètre est à laser semiconducteur d'émission dudit signal de mesure,
- ladite liaison comporte, en outre, à chaque point d'épissurage de la liaison, un capteur sensible aux conditions d'environnement, créant sur ladite liaison, en réponse aux conditions détectées, un défaut non préjudiciable à la transmission desdits signaux utiles mais détectable par ledit ensemble de télésurveillance, pour une surveillance automatique de l'état de ladite liaison.

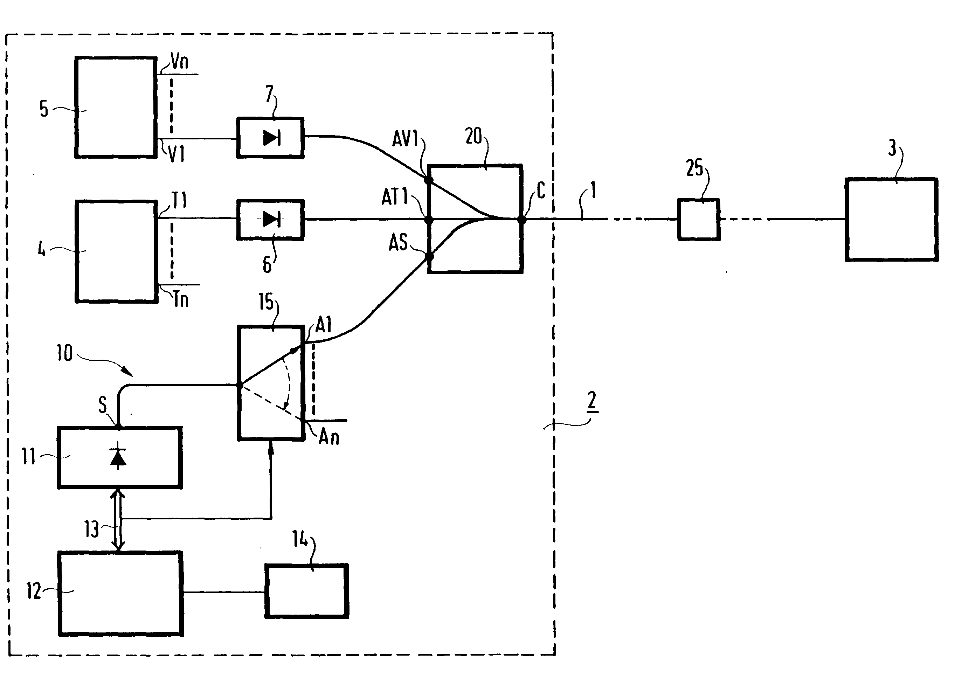

Les caractéristiques et avantages de la présente invention ressortiront de la description faite ci-après d'un exemple de réalisation illustré dans la figure unique des dessins ci-annexés.

Cette figure unique représente schématiquement une installation de transmission à liaison optique télésurveillée.

Dans cette installation, on a représenté une seule fibre optique 1 de la liaison, assurant la transmission de signaux utiles d'une station dite centrale d'émission/réception 2 à une terminaison d'abonné 3.

La fibre optique 1 est une fibre unimodale. Elle est utilisée pour une transmission unilatérale, auquel cas une autre fibre analogue de transmission en sens inverse lui est associée pour former une paire de transmission de la liaison optique, ou est utilisée pour une transmission bilatérale de signaux avec un protocole de transmission de signaux utiles entre la station centrale et la terminaison d'abonné.

D'autres fibres ou paires de fibres analogues desservent d'autres terminaisons d'abonnés depuis cette station centrale. La liaison optique résultante peut être de manière connue du type point à point ou du type point-multipoint et réalisée à travers un sous-répartiteur.

La station centrale 2 regroupe un central téléphonique 4 et un réseau de distribution de signaux vidéo 5. Pour une liaison point-à-point considérée, à n fibres ou paires de fibres entre la station centrale 2 et n terminaisons d'abonné analogues à la terminaison 3, le central téléphonique est à n accès pour ces n fibres ou paires de fibres, notés T₁ à Tₙ, et le réseau vidéo à n accès pour ces n fibres ou paires de fibres, notés V₁ à Vₙ.

Dans la station centrale 2, un premier laser 6 est relié à l'accès T₁ du central téléphonique 4, pour sa modulation par les informations du central, au débit de la bande étroite des informations du central. Un deuxième laser 7 est relié à l'accès V₁ du réseau vidéo 5, pour sa modulation par les données large bande venant du réseau, au débit de ces données. D'autres lasers identiques au premier 6 sont reliés aux autres accès T₂ à Tₙ du central 4 et pareillement d'autres lasers identiques au deuxième 7 sont reliés aux autres accès V₂ à Vₙ du réseau, pour la transmission de signaux utiles sur les autres fibres identiques à la fibre 1.

Le premier laser 6 est choisi de longueur d'onde de valeur nominale de 1 310 nm et le deuxième laser 7 de longueur d'onde de valeur nominale de 1 550 nm, pour la transmission de signaux utiles venant du central et du réseau à l'une et l'autre de ces deux valeurs, respectivement.

Un ensemble de télésurveillance 10, également dans la station centrale 2, assure la télésurveillance de la fibre 1 et des autres fibres de transmission de signaux utiles depuis la station centrale 2. Cet ensemble de télésurveillance comporte un réflectomètre 11, un calculateur 12 couplé par un bus 13 au réflectomètre, et une alarme 14 reliée au calculateur pour son déclenchement lors d'un défaut sur l'une ou l'autre des fibres telles que 1. Un commutateur électronique 15, est couplé à l'accès d'entrée/sortie de surveillance noté S du réflectomètre 10, pour l'émission du signal de mesure et la réception du signal de réponse séquentiellement sur la fibre 1 et les autres fibres de transmission de signaux utiles depuis la station centrale. Ce commutateur est à n accès pour ces n fibres, notés A₁ à Aₙ. Il est commandé en synchronisme avec le réflectomètre par un signal délivré par le calculateur sur le bus 13.

Ce réflectomètre 11 est à laser interne choisi de longueur d'onde de valeur nominale de 1 480 nm, en tant que tel déjà connu et utilisé notamment pour le pompage d'amplificateurs optiques, les composants passifs à cette longueur d'onde, tels que multiplexeurs ou isolateurs optiques, nécessaires à la réalisation du réflectomètre et de l'installation de transmission selon la présente invention étant par ailleurs disponibles sur le marché.

Dans cette station centrale 2, un multiplexeur 20 relie le premier laser 6, le deuxième laser 7 et séquentiellement le réflectomètre 10 à la fibre 1, pour le multiplexage en longueur d'onde des signaux utiles provenant du central 4 et/ou du réseau vidéo 5 et des signaux de mesure du réflectomètre et leur transmission sur la fibre 1. Ce multiplexeur 20 est à trois accès sélectifs notés AT₁, AV₁ et A_{S}, calés individuellement sur les longueurs d'onde de 1 310 nm, 1 550 nm et 1 480 nm, qui sont reliés pour le premier AT₁ au premier laser 6, pour le deuxième AV₁ au deuxième laser 7 et pour le troisième AS séquentiellement au réflectomètre 11 à travers le commutateur électronique 15 par l'accès A1 de celui-ci. Il est à quatrième accès commun, noté C, à large bande, qui est centrée sensiblement sur la longueur d'onde intermédiaire de 1 480 nm affectée au réflectomètre et inclut les deux longueurs d'onde de 1 310 nm et 1 550 nm affectées aux signaux utiles. Cet accès commun C est relié à l'entrée d'émission de la fibre 1, pour la station centrale.

D'autres multiplexeurs identiques au multiplexeur 20 sont pareillement reliés aux autres fibres de transmission, pour la transmission de signaux utiles sur les deux longueurs d'onde précitées affectées aux signaux utiles et la télésurveillance sur la troisième longueur d'onde intermédiaire des signaux de mesure affectée au réflectomètre

Le multiplexeur 20, montré à trois accès sélectifs calés individuellement sur les trois longueurs d'onde précitées, peut bien entendu être remplacé par deux duplexeurs en cascade. Le premier de ces deux duplexeurs est par exemple à deux accès sélectifs pour les signaux utiles à 1 550 nm et les signaux de mesure à 1 480 nm et à accès commun à bande moyenne centrée sur 1 480 nm et incluant la longueur d'onde à 1 550 nm, mais pas celle à 1 310 nm. Le deuxième de ces deux duplexeurs a l'un de ses accès sélectifs relié à l'accès commun du premier et l'autre calé sur l'autre longueur d'onde à 1 310 nm des signaux utiles, son accès commun est à large bande incluant l'ensemble des trois longueurs d'onde .

En outre, on dispose au niveau des points de défaut possible sur la liaison, en particulier au niveau de ses points d'épissurage, des capteurs sensibles aux conditions d'environnement, notamment d'humidité ou autre, des épissures, tels que le capteur 25 représenté sur la fibre 1. Ce capteur détecte la pénétration d'humidité ou autre origine de défaut possible à l'épissure. En réponse à cette détection, il crée sur la fibre 1 un léger défaut, donnant une atténuation de l'ordre ou inférieur à 1dB, non préjudiciable à la transmission des signaux utiles mais détectable par le système de télésurveillance, pour une surveillance automatique de l'état de vieillissement de la liaison.

Cette télésurveillance de la liaison optique sur la longueur d'onde 1 480 nm laisse les deux longueurs d'onde de 1 550 nm et 1 310 nm disponibles pour la transmission des signaux utiles. Avantageusement, le laser du réflectomètre à 1 480 nm permet l'émission à une puissance élevée, de l'ordre de 70 mW, du signal de mesure, celui-ci ne nécessitant pas une bande passante très large pour une distance entre points éventuellement défectueux à différencier de l'ordre ou supérieure à 500 m. Cette puissance d'émission du signal de mesure améliore ainsi la dynamique de mesure pour la télésurveillance de la liaison.

## Revendications

1. Installation de transmission à liaison optique télésurveillée, dans laquelle ladite liaison est à fibres unimodales couplant une station centrale (2) d'émission/réception de signaux dits utiles à des terminaisons d'abonnés (3), et ladite station centrale comporte des premiers et seconds moyens électro-optiques d'émission/réception (4,6;5,7) desdits signaux utiles à une première et respectivement une deuxième longueur d'onde de transmission définies et différentes l'une de l'autre, typiquement de valeurs nominales sensiblement égales à 1 310 nm et 1 550 nm, respectivement, un ensemble de télésurveillance (10) à réflectomètre optique (11) générant un signal dit de mesure à une troisième longueur d'onde de mesure différente desdites première et deuxième longueurs d'onde de transmission, et des moyens de couplage (20) ayant d'une part des accès sélectifs en longueur d'onde (AV1,AT1,AS) couplés individuellement auxdits premiers et seconds moyens d'émission/réception et audit réflectomètre, et d'autre part un accès commun large bande (C), caractérisée en ce que ledit réflectomètre est calé sur ladite troisième longueur d'onde de mesure choisie entre lesdites première et deuxième longueurs d'onde et typiquement de valeur nominale sensiblement égale à 1 480 nm, et en ce que lesdits moyens de couplage ont ledit accès commun (C), à large bande centrée sensiblement sur ladite troisième longueur d'onde.

2. Installation selon la revendication 1 caractérisée en ce que lesdits premiers et seconds moyens électro-optiques d'émission réception de signaux utiles sont constitués par un central téléphonique (4) et au moins un premier composant électro-optique associé (6) modulé par les signaux d'informations dudit central à transmettre sur ladite liaison, et par un réseau vidéo (5) et au moins un deuxième composant électro-optique associé (7) modulé par les signaux de données dudit réseau à transmettre sur ladite liaison.

3. Installation selon l'une des revendications 1 et 2, caractérisée en ce que ledit réflectomètre (11) est à laser d'émission dudit signal de mesure à une puissance de l'ordre de 70 mW.

4. Installation selon la revendication 3, caractérisée en ce que ladite liaison comporte, en outre, à chaque point d'épissurage de la liaison, un capteur (25) sensible aux conditions d'environnement, créant sur ladite liaison, en réponse aux conditions détectées, un défaut non préjudiciable à la transmission desdits signaux utiles mais détectable par ledit ensemble de télésurveillance (12), pour une surveillance automatique de l'état de ladite liaison.

## Patentansprüche

1. Übertragungsanlage mit fernüberwachter optischer Verbindung, bei der diese Verbindung monomodale Lichtleitfasern aufweist, die eine zentrale Sende-/Empfangs-Station (2) für Nutzsignale an Teilnehmeranschlüsse (3) koppelt, und bei der die zentrale Station erste und zweite elektro-optische Mittel zum Senden und Empfangen (4, 6; 5, 7) dieser Nutzsignale mit zwei definierten und voneinander unterschiedlichen Übertragungs-Wellenlängen, typischerweise mit Nennwerten im wesentlichen gleich 1310 nm bzw. 1550 nm, eine Fernüberwachungseinheit (10) mit einem optischen Reflektometer (11), das ein Meßsignal mit einer dritten Wellenlänge erzeugt, die sich von der ersten und der zweiten Übertragungswellenlänge unterscheidet, und Koppelmittel (20) enthält, die einerseits wellenlängenselektive Zugänge (AV1, AT1, AS), die individuell mit den ersten bzw. zweiten Sende-/Empfangsmitteln bzw. dem Reflektometer gekoppelt sind, und andererseits einen gemeinsamen Breitband-Zugang (C) aufweisen, dadurch gekennzeichnet, daß das Reflektometer auf die dritte Wellenlänge abgestimmt ist, die zwischen der ersten und der zweiten Wellenlänge liegt und typisch einen Nennwert von im wesentlichen gleich 1480 nm aufweist, und daß der gemeinsame Breitband-Zugang (C) der Koppelmittel im wesentlichen auf die dritte Wellenlänge zentriert ist.

2. Anlage nach Anspruch 1, dadurch gekennzeichnet, daß die ersten und die.zweiten elektro-optischen Sende-/Empfangsmittel für Nutzsignale aus einer Telefonzentrale (4) mit mindestens einem ersten zugeordneten elektro-optischen Bauteil (6), das von den Informationssignalen der Zentrale moduliert wird, die auf dieser Verbindung übertragen werden sollen, bzw. aus einem Videonetz (5) mit mindestens einem zweiten zugeordneten elektro-optischen Bauteil (7) bestehen, das von den Datensignalen des auf dieser Leitung zu übertragenden Videonetzes moduliert wird.

3. Anlage nach einem der Ansprüche 1 und 2, dadurch gekennzeichnet, daß das Reflektometer (11) einen Laser zur Aussendung des Meßsignals mit einer Leistung von etwa 70 mW besitzt.

4. Anlage nach Anspruch 3, dadurch gekennzeichnet, daß die Verbindung außerdem an jedem Spleißpunkt der Verbindung eine Meßsonde (25) aufweist, die für die Umgebungsbedingungen empfindlich ist und auf der Verbindung als Reaktion auf die erfaßten Bedingungen einen die Übertragung der Nutzsignale nicht störenden, aber von der Fernüberwachungseinheit (12) erfaßbaren Fehler erzeugt, um eine automatische Überwachung des Zustands der Verbindung zu erlauben.

## Claims

1. A transmission installation having a remotely monitored optical link, in which installation said link has single-mode fibers coupling a central station (2) to subscriber terminations (3) to transmit and receive traffic signals, and said central station includes first and second electro-optical transmit/receive means (4, 6; 5, 7) for transmitting/receiving said traffic signals at a first transmission wavelength and respectively a second transmission wavelength that are defined and different from each other, typically having nominal values substantially equal to 1,310 nm and 1,550 nm respectively, a remote-monitoring unit (10) having an optical reflectometer (11) generating a "measurement" signal at a measurement third wavelength that is different from said first and second transmission wavelengths, and coupling means (20) having firstly wavelength-selective accesses (AV₁, AT₁, A_{S}) individually coupled to said first and second transmit/receive means and to said reflectometer, and secondly a wide-band common access (C), said installation being characterized in that said reflectometer is set to said measurement third wavelength chosen between said first and second wavelengths and typically of nominal value substantially equal to 1,480 nm, and in that said coupling means have said common access (C) having a wide band centered substantially on said third wavelength.

2. An installation according to claim 1, characterized in that said first and second electro-optical transmit/receive means for transmitting/receiving traffic signals are constituted firstly by a telephone exchange (4), and at least one first associated electro-optical component (6) modulated by the information signals form said exchange to be transmitted over said link, and secondly by a video network (5) and at least one second associated electro-optical component (7) modulated by the data signals from said network to be transmitted over said link.

3. An installation according to claim 1 or 2, characterized in that said reflectometer (11) has a laser for transmitting said measurement signal at a power of about 70 mW.

4. An installation according to claim 3, characterized in that said link further includes, at each splice point of the link, a sensor (25) sensitive to the surrounding environmental conditions, and responding to the detected conditions by creating on said link a fault that is not detrimental to transmission of said traffic signals but that is detectable by said remote-monitoring unit (12), so as to monitor the state of said link automatically.
